# EUROPÄISCHE PATENTSCHRIFT

(11) **EP 0 499 199 B1**
(45) Veröffentlichungstag und Bekanntmachung des Hinweises auf die Patenterteilung: **13.09.1995**
(21) Anmeldenummer: 92102249.7
(22) Anmeldetag: 11.02.1992
(51) Int. Cl.: B60B 39/02, B61C 15/10, G01F 23/00, G01G 19/08, G01F 23/28

(54) **Sandungsanlage für Fahrzeuge, insbesondere Schienenfahrzeuge**
Sanding device for vehicles, especially railway vehicles
Dispositif de sablage pour véhicules, notamment véhicules ferroviaires

(30) Priorität: 15.02.1991 DE 4104734; 03.07.1991 DE 4122032
(43) Veröffentlichungstag der Anmeldung: 19.08.1992
(73) Patentinhaber: KNORR-BREMSE AG, 80710 München (DE)
(72) Erfinder: Wutzl, Hans, A-1100 Wien (AT)

(56) Entgegenhaltungen:
- EP-A- 0 016 471
- BE-A- 525 256
- GB-A- 2 039 847
- US-A- 2 265 882
- US-A- 4 121 457
- US-A- 4 292 530
- JOURNAL DE L'EQUIPEMENT ELECTRIQUE ET ELECTRONIQUE, no. 348, April 1974, Seiten70-73, FR; "L'opto-électronique; les applications logiques"
- SOVIET INVENTIONS ILLUSTRATED, Sektion PQ, Woche 9022, 11. Juli 1990, KlasseQ21, AN=90-169746/22, Derwent Publications Ltd, London, GB; & SU-A-1521 641 (TASHK RAIL TRANSP.) 15-11-1989

## Beschreibung

Die Erfindung betrifft eine Sandungsanlage nach dem Gattungsbegriff des Patentanspruches 1.

Sandungsanlagen für Fahrzeuge, insbesondere Schienenfahrzeuge, weisen einen Sandvorratsbehälter auf, in welchem sich Sand von vorgegebener Menge bzw. vorgegebenem Volumen befindet; dieser Sand wird innerhalb des Vorratsbehälters mit mechanischen und/oder pneumatischen Mitteln aufbereitet und in dosierter Form mittels eines Auslaufrohres in den Spalt zwischen einem Fahrzeugrad und der Fahrbahn bzw. Schiene eingeblasen. Der Sandverbrauch wird im allgemeinen durch optische Wahrnehmung ermittelt, vorzugsweise durch die Einfüllöffnung des Behälters; es sind auch Erfahrungswerte vorhanden, welche in etwa den Sandverbrauch pro Zeiteinheit definieren und davon ausgehend die verfügbare Gesamtmenge bestimmen.

Die visuelle Untersuchung des Sandvorratsbehälters, gff. mit Hilfe eines Schauglases, ist infolge der spezifischen Eigenschaften des Sandes mit beträchtlichen Schwierigkeiten verbunden; der Sandstaub beeinträchtigt die genaue Ablesbarkeit und demnach die erforderliche Anzeige für den Gesamtverbrauch.

Bei Sandungsanlagen mit insbesondere pneumatischer Aufbereitung und Dosierung werden Vorratsbehälter verwendet, welche mit einem vorbestimmten Innendruck arbeiten und im Betrieb demnach nicht geöffnet werden können; eine derartige, mit Innendruck arbeitende Sandungsanlage ist z. B. aus der EP-A-0 016 471 bekannt. Bei mit derartigen Sandvorratsbehältern versehenen Sandungsanlagen ist die Füllstandsanzeige unter Verwendung visueller Mittel nur sehr schwierig möglich.

Es sind bereits Sandungsanlagen der eingangs genannten Art bekannt, bei welchen die Füllstandsanzeigevorrichtung einen auf der Sandoberfläche schwimmenden Schwimmkörper aufweist, der über eine Hubstange oder eine Drehwelle eine außerhalb des Sandvorratsbehälters befindliche Anzeigevorrichtung für den Sand-Füllungszustand betätigt; die BE-A-525 256 und die US-A-2 265 882 zeigen derartige Sandungsanlagen. Die BE-A-525 256 zeigt dabei desweiteren eine willkürlich ein- und ausschaltbare Leuchtanzeige für den Sand-Füllungszustand, die durch eine mit der Hubstange gekoppelte Kontakteinrichtung gesteuert ist. Bei diesen Sandungsanlagen muß jedoch beim Nachfüllen von Sand darauf geachtet werden, daß der Schwimmkörper wieder zur Sandoberfläche gelangt, da andernfalls Fehlanzeigen auftreten.

Bekannt sind sog. Spender, z. B. Kaffeespender etc. (GB-A-2 039 847) bei welchen das Füllniveau mit einer Licht emittierenden Diode und einem unter Abstand angeordneten Sensor überwacht wird. Ein Einsatz derartiger Anzeigevorrichtungen in Sandungsanlagen der gattungsgemäßen Art ist nicht naheliegend und auch nicht möglich, da dem besonderen Problem von Verunreinigung durch Staubpartikel nicht Rechnung getragen ist.

Demgemäß besteht die Aufgabe der Erfindung darin, eine Sundungsanlage der in Rede stehenden Art so auszugestalten, daß die Füllstandsanzeige absolut zuverlässig ermöglicht ist. Auch sollen die hierfür vorgesehenen Mittel von baulich einfacher und funktionell zuverlässiger Art sein, insbesondere im Hinblick auf die bei derartigen Sandungsanlagen auftretenden Verunreinigungen durch Staub.

Zur Lösung dieser Aufgabe dienen die Merkmale nach dem Kennzeichnungsteil des Patentanspruches 1.

Die selbsttätig wirkende Füllstandsanzeigevorrichtung nach der Erfindung erweist sich als besonders vorteilhaft, da sie sowohl unabhängig vom Betriebszustand des Sandvorratsbehälters als auch unabhängig von den Druckverhältnissen im Behälter wirkt. Auch kann ein Nachfüllen von Sand die Arbeitsweise der Füllstandsvorrichtung nicht beeinträchtigen.

Vorteilhafte Ausgestaltungen und Weiterbildungen sind in den abhängigen Patentansprüchen aufgeführt.

Die Erfindung ist nachfolgend anhand von Ausführungsbeispielen unter Bezugnahme auf die beigefügte Zeichnung erläutert, und zwar zeigt
- Fig.1: eine vereinfachte Ansicht einer Sandungsanlage mit einer Füllstandsanzeigevorrichtung gemäß einer ersten Ausführungsform der Erfindung und
- Fig.2: in vergrößerter Längsschnittansicht eine vorteilhaft abgewandelte Ausgestaltung der Füllstandsanzeigevorrichtung nach Fig.1.

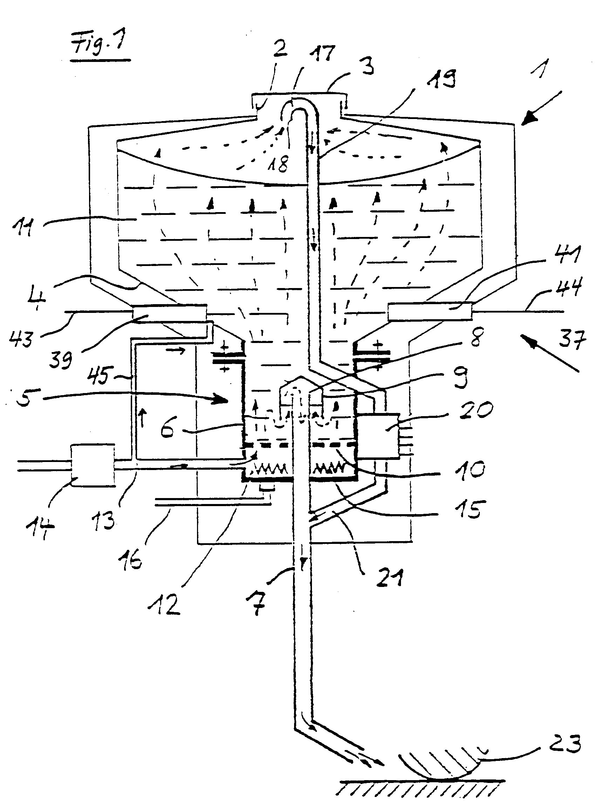

In Fig.1 der Zeichnung ist ein Sandvorratsbehälter 1 einer Sandungsanlage dargestellt; der Sandvorratsbehälter 1 besitzt an seinem oberen Ende eine zentrale Öffnung 2 zum Nachfüllen von Sand. Die Öffnung 2 ist durch einen Deckel 3 weitgehend dicht verschließbar. Der Sandvorratsbehälter 1 besitzt an seinem unteren Ende ein trichterförmig sich verengendes Auslaufende 4, an das eine Dosiervorrichtung 5 angeflanscht ist.

Die an den Sandvorratsbehälter 1 angeflanschte Dosiervorrichtung 5 weist einen topfförmigen Dosierbehälter 6 auf. In den Dosierbehälter 6 ragt durch seinen Boden ein Auslaufrohr 7, dessen oberes Ende 8 unter eine feste Glocke 9 mit Abstand vom inneren Glockenboden ragt.

Unter Abstand vom Boden des Dosierbehälters 6 befindet sich eine luftdurchlässige Sintermetallplatte 10. Oberhalb dieser Platte ist die Glocke 9 angeordnet. Der Sand 11 im Sandvorratsbehälter 1 ruht auf der Sintermetallplatte 10. In den sandfreien Raum 12 zwischen der Sintermetallplatte 10 und dem Boden des Dosierbehälters 6 mündet eine Zuluftleitung 13, an die ein Verstärkerventil 14 angeschlossen ist. Über das Verstärkerventil 14 kann ein Luftstrom mit einem bestimmten Druck in den Dosierbehälter abgegeben werden. Hierbei kann es sich z.B. um eine Luftmenge von 1,5 l/s bei einem Druck von 0,5 bar handeln. Im Raum 12 befindet sich eine elektrische Heizung 15 mit einem nach außen geführten Stromanschluß 16. Die in den Sandvorratsbehälter 1 einströmende Luft streicht an der Heizung 15 vorbei und wird von dieser erwärmt.

Etwa an höchsten Punkt des Sandvorratsbehälters 1 befindet sich ein Rohrkrümmer 17 mit nach unten weisender freier Öffnung 18. An den Rohrkrümmer schließt eine Abluftleitung 19 an, die den Sandvorratsbehälter 1 durchragt und die durch die seitliche Wandung des Dosierbehälters 5 nach außen geführt ist. Hier schließt die Abluftleitung 19 an eine einstellbare Drossel 20 an, die über einen Leitungsabschnitt 21 an das Auslaufrohr 7 angeschlossen ist. Das Auslaufrohr 7 mündet in den Spalt zwischen einem Fahrzeugrad 23 und der Fahrbahn bzw. der Schiene.

Diese im wesentlichen der bereits erwähnten EP-A-0 016 471 entsprechende Dosiervorrichtung arbeitet wie folgt:
Die Fließfähigkeit des Sandes im Behälter ist bei einem bestimmten Kornspektrum nur dann jederzeit sichergestellt, wenn der Sand genügend trocken und aufgelockert ist. Damit bei einer Bremsung des Fahrzeuges gegebenenfalls eine die Bremsung unterstützende Sandung mit großer Betriebssicherheit eingeschaltet werden kann, wird vor einer Sandung eine Zwangsbelüftung des Sandvorratsbehälters und möglichst aller luft- und sandführenden Leitungen mit durch die Heizung 15 erwärmter Luft vorgenommen, ohne daß dabei schon eine Sandförderung aus dem Behälter eingeleitet wird. Hierdurch soll der Sand vor der Einleitung einer Sandung ausreichend belüftet bzw. aufgelockert und getrocknet und zum Abfließen über die Glocke und das Auslaufrohr vorbereitet werden.

Eine solche Zwangsbelüftung des Sandvorratsbehälters zusammen mit dem angeflanschten Dosierbehälter läßt sich bei einem weiten Öffnungsquerschnitt der Drossel 20 erreichen. Hierbei kann die Fließfähigkeit des Sandes durch einen intensiven Luftstrom entgegen der Schwerkraft bereits stark gesteigert werden. Die Gestalt und Anordnung der Glocke 9, der Abluftleitung 19 mit Rohrkrümmer 17 und Öffnung 18 und des Auslaufrohres 7 unter der Glocke 9 sind derart gewählt und zueinander abgestimmt, daß bei einem gegebenen Sand mit einem bestimmten Kornspektrum der über die Zuluftleitung mit konstanten Druck zugeführte Luftstrom zur Förderung des Sandes über die Glocke in das Auslaufrohr 7 entgegen der Schwerkraft noch nicht ausreicht. Es bedarf dann aber nur einer geringen Drosselung des offenen Querschnittes der Drossel 20 in der Abluftleitung 19, um eine Sandförderung einzuleiten. Je enger der Drosselquerschnitt gestellt wird, um so größer ist die Sandförderung pro Zeiteinheit.

Zum Erzielen einer hohen Betriebssicherheit der Dosiervorrichtung kann der Sandvorratsbehälter ständig oder wenigstens zeitweise bei einem niedrigeren Druck in der Zuluftleitung und eingeschalteter Heizung belüftet werden.

Die Abluftleitung 19 mit der Drossel 20 ist derart ausgelegt, daß auch bei dem weitesten Drosselquerschnitt im Sandvorratsbehälter noch ein Überdruck von etwa 0,01 bis 0,05 bar erzielt wird. Hierdurch wird ein Einströmen von feuchter Luft durch Undichtigkeiten im Behälter sicher vermieden.

Die in Fig.1 dargestellte Füllstandsanzeigevorrichtung 37 weist einen optischen Geber 39 in Form einer Lichtquelle und ein Sensorelement 41 auf. Der optische Geber 39 und das optisch empfindliche Sensorelement 41 sind z.B. in der aus Fig.1 ersichtlichen Weise unter Abstand zueinander seitlich im Bereich des Auslaufendes 4 in den Sandvorratsbehälter 1 eingesetzt, derart, daß sie zwischen sich das im Auslaufende 4 befindliche Sandvolumen eingrenzen. Es sind (nicht dargestellte) Dichtungsmittel vorgesehen, welche den Außenumfang des Gebers 39 und des Sensorelements 41 gegenüber der Wandung des Sandvorratsbehälters 1 abdichten, um einen Druckabfall im Inneren des Sandvorratsbehälters zu vermeiden. Wird die Sandungsanlage in Betrieb genommen und liegt ein Sandverbrauch vor, welcher den Pegel des Sandvolumens unterhalb des Niveaus des Gebers 39 und des Sensorelements 41 absinken läßt, dann tritt eine Wechselwirkung zwischen dem Geber und dem Sensorelement 41 ein, d.h., es wird ein Signal ausgelöst, welches für die Füllstandsanzeige verwendet wird. Es sind elektrische Leitungen 43 und 44 vorgesehen, welche in an sich bekannter Weise den Geber und das Sensorelement mit einer Anzeige- und Auswerteeinheit verbinden.

Die Funktionsfähigkeit des Gebers und des Sensorelements ist nur dann sichergestellt, wenn eine optisch freie Bahn zwischen diesen Elementen besteht. Folglich ist die Position der vertikalen Abluftleitung 19 als hinter der optische Achse der beiden Elemente befindlich zu verstehen. Um ein Verunreinigen des optischen Gebers 39 zu vermeiden, kann an die Zuluftleitung 13 eine Zweigleitung 45 angeschlossen sein, welche im Bereich des Geberkopfes endet und dazu dient, diesen von Verunreinigungen freizublasen. In entsprechender Weise kann dem Sensorelement 41 eine (nicht dargestellte) Zweigleitung zugeordnet sein, welche die Spitze des Sensorelements freibläst, derart, daß die Funktionsfähigkeit der vorstehend beschriebenen Sensoreinrichtung gewährleistet ist.

Es können auch in unterschiedlichen Höhenlagen mehrere Geber- und Sensorelemente vorgesehen sein, so daß unter Verwendung unterschiedlicher Auswertesignale die Höhe des Sandvolumens im Sandvorratsbehälter aufzeigbar ist. Auch ist es möglich, zwischen Geber und Sensor andere Strahlen als Lichtstrahlen zur Messung heranzuziehen.

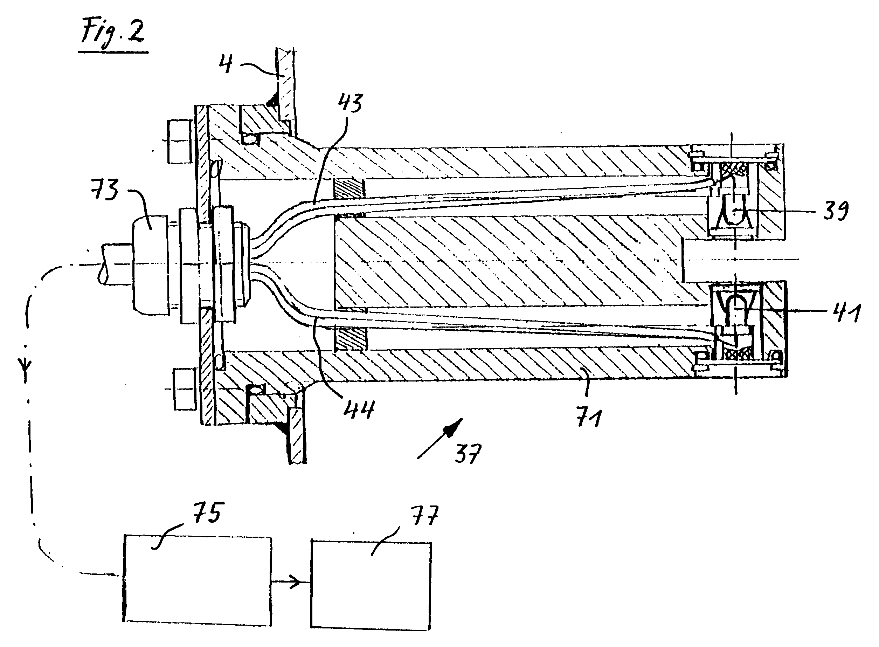

In Fig.2 der Zeichnung ist eine vorteilhafte Ausgestaltung der Füllstandsanzeigevorrichtung für die Anordnung nach Fig.1 wiedergegeben. Die Füllstandsanzeigevorrichtung 37 gemäß Fig.2 ist als Einschubeinheit 71 aufgebaut, d.h. der optische Geber 39 und das Sensorelement 41 sind in einem gemeinsamen Gehäuse montiert, welches seinerseits schnellöslich am Sandvorratsbehälter, vorzugsweise in das Auslaufende sich erstreckend, befestigbar ist. Wie im Falle der Ausführungsform nach Fig.2 wird der zwischen dem Geber 39 und dem Sensorelement 41 bestehende Zwischenraum überwacht; die Leitungen 43 und 44 des Gebers und des Sensorelements sind in einem gemeinsamen Anschluß 73 aus der Einschubeinheit herausgeführt und an eine Elektronikeinheit 75 angeschlossen. Innerhalb der Elektronikeinheit 75 erfolgt die Umsetzung der Meßsignale und Weiterleitung an optische und/oder akustische Anzeigeeinrichtungen 77. Es ist auch möglich, automatisch wirkende (nicht dargestellte) Fülleinrichtungen vorzusehen, welche nach Maßgabe der vom Geber und Sensorelement ermittelten Signale wirksam werden, um ein vorbestimmtes Niveau von Sand im Vorratsbehälter aufzufüllen.

### Bezugszeichenliste

- 1: Sandvorratsbehälter
- 2: Öffnung
- 3: Deckel
- 4: Auslaufende
- 5: Dosiervorrichtung
- 6: Dosierbehälter
- 7: Auslaufrohr
- 8: Ende
- 9: Glocke
- 10: Sintermetallplatte
- 11: Sand
- 12: Raum
- 13: Zuluftleitung
- 14: Verstärkerventil
- 15: Heizung
- 16: Stromanschluß
- 17: Rohrkrümmer
- 18: Öffnung
- 19: Abluftleitung
- 20: Drossel
- 21: Leitungsabschnitt
- 23: Fahrzeugrad
- 37: Füllstandsanzeigevorrichtung
- 39: optischer Geber
- 41: Sensorelement
- 43: Leitung
- 44: Leitung
- 45: Zweigleitung
- 71: Einschubeinheit
- 73: Anschluß
- 75: Elektronikeinheit
- 77: Anzeigeeinrichtung

## Patentansprüche

1. Sandungsanlage für Schienenfahrzeuge, mit einem in einem Sandvorratsbehälter (1) befindlichen Sandvolumen, aus welchem mittels einer Dosiervorrichtung (5) und einem daran angeschlossenen Auslaufrohr (7) Teilmengen von Sand in den Spalt zwischen einem Fahrzeug-rad (23) und der Fahrbahn bzw. Schiene eingegeben werden, und mit einer selbsttätig wirkenden, am Aufbau des Sandvorratsbehälters (1) angeordneten Füllstandsanzeigevorrichtung, dadurch gekennzeichnet, daß die Füllstandsanzeigevorrichtung (37) einen im Sandvorratsbehälter eingesetzten, von einer Einschubeinheit (71) gehalterten optischen Geber (39) aufweist, welchem ein gleichfalls von der Einschubeinheit (71) gehaltertes Sensorelement (41) unter Abstand gegenübersteht, derart, daß der Geber (39) und das Sensorelement (41) ein bei Entleerung des Sandvorratsbehälters vom Sand freigegebenes Niveau überwachen, wobei die elektrischen Zuleitungen für den Geber und das Sensorelement gemeinsam aus der Einschubeinheit (71) herausgeführt sind, und daß an die Spitze des optischen Gebers (39) und/oder des Sensorelements (41) eine Druckluft führende Leitung zum Freiblasen von Verunreinigungen herangeführt ist.

2. Sandungsanlage nach Anspruch 1, dadurch gekennzeichnet, daß die Einschubeinheit (71) aus einem den Geber und das Sensorelement tragenden Gehäuse besteht, welches von außen in den Sandvorratsbehälter unter Abdichtung lösbar eingesetzt ist.

3. Sandungsanlage nach einem der vorangehenden Ansprüche, dadurch gekennzeichnet, daß mehrere Geber- und Sensorelemente in unterschiedlichen Höhenlagen im Sandvorratsbehälter montiert sind.

4. Sandungsanlage nach einem der vorangehenden Ansprüche, dadurch gekennzeichnet, daß der optische Geber (39) und das Sensorelement (41) über Leitungen (43, 44) und eine Elektronik-Auswerteeinheit an Anzeigeeinrichtungen von optischer oder akustischer Wirkungsweise angeschlossen sind.

5. Sandungsanlage nach Anspruch 1, dadurch gekennzeichnet, daß die Druckluft führende Leitung als eine Zweigleitung (45) der Dosiereinrichtung der Sandungsanlage besteht und durch die Wand des Sandvorratsbehälters hindurch in den Bereich der Spitze des optischen Gebers und/oder des Sensorelements geführt ist.

## Claims

1. Sanding device for rail vehicles, having a volume of sand contained in a sand storage container (1) from which partial amounts of sand are introduced by means of a dosing device (5) and a discharge pipe (7) connected thereto into the gap between a vehicle wheel (23) and the track or rail, and having an automatically-operating filling state indicator arranged on the body of the sand storage container (1), characterised in that the filling state indicator (37) has an optical transmitter (39) inserted in the sand storage container and retained by a plug-in unit (71), a sensor element (41) also retained by the plug-in unit (71) being disposed opposite this transmitter and spaced from it in such a way that the transmitter (39) and the sensor element (41) monitor a level disclosed on emptying the sand storage container of sand, the electrical supply lines for the transmitter and the sensor element being guided together out of the plug-in unit (71), and in that a line conveying compressed air for blowing free of impurities leads to the tip of the optical transmitter (39) and/or the sensor element (41).

2. Sanding device according to claim 1, characterised in that the plug-in unit (71) comprises a housing carrying the transmitter and the sensor element, the housing being removably inserted from the outside into the sand storage container and sealed.

3. Sanding device according to one of the preceding claims, characterised in that several transmitter and sensor elements are mounted at various levels in the sand storage container.

4. Sanding device according to one of the preceding claims, characterised in that the optical transmitter (39) and the sensor element (41) are connected by means of lines (43, 44) and an electronic evaluation unit to display devices operating optically or acoustically.

5. Sanding device according to claim 1, characterised in the the line conveying compressed air exists as a branch line (45) of the dosing device of the sanding device and is guided through the wall of the sand storage container into the region of the tip of the optical transmitter and/or the sensor element.

## Revendications

1. Ensemble de sablage pour véhicules sur rails, comprenant un volume de sable se trouvant dans un réservoir de sable (1), à partir duquel, à l'aide d'un dispositif de dosage (5) et d'un tube de décharge (7) raccordé à ce dernier, des quantités partielles de sable sont envoyées dans l'interstice entre une roue (23) du véhicule et la voie de circulation, à savoir le rail, l'ensemble comprenant également un dispositif indicateur du niveau de remplissage à fonctionnement automatique, disposé sur la structure du réservoir de sable (1), caractérisé en ce que le dispositif indicateur du niveau de remplissage (37) comporte un émetteur optique (39) monté dans le réservoir de sable, supporté par une unité à tiroir inserable (71), et en regard et à distance duquel est placé un élément de détection (41) également supporté par l'unité à tiroir inserable (71), de manière telle que l'émetteur (39) et l'élément de détection (41) surveillent un niveau libéré par le sable lors du vidage du réservoir de sable, les conducteurs électriques pour l'émetteur et l'élément de détection sortant conjointement de l'unité à tiroir inserable (71), et en ce qu'une conduite d'air comprimé est amenée à la pointe de l'émetteur optique (39) et/ou de l'élément de détection (41), en vue de chasser les impuretés, par soufflage.

2. Ensemble de sablage selon la revendication 1, caractérisé en ce que l'unité à tiroir inserable (71) est constituée d'un carter, qui porte l'émetteur et l'élément de détection, et qui est inséré de l'extérieur, de manière amovible et étanche, dans le réservoir de sable.

3. Ensemble de sablage selon l'une des revendications précédentes, caractérisé en ce que plusieurs émetteurs et éléments de détection sont montés dans le réservoir à sable, à des hauteurs différentes.

4. Ensemble de sablage selon l'une des revendications précédentes, caractérisé en ce que l'émetteur optique (39) et l'élément de détection (41) sont raccordés, par l'intermédiaire de conducteurs (43, 44) et d'une unité électronique de traitement de données, à des dispositifs indicateurs à mode d'action optique ou acoustique.

5. Ensemble de sablage selon la revendication 1, caractérisé en ce que la conduite d'air comprimé se présente sous la forme d'une conduite de dérivation (45) du dispositif de dosage de l'ensemble de sablage, et est amenée, à travers la paroi du réservoir de sable, dans la zone de la pointe de l'émetteur optique et/ou de l'élément de détection.
